# EUROPÄISCHE PATENTSCHRIFT

(11) **EP 0 917 545 B1**
(45) Veröffentlichungstag und Bekanntmachung des Hinweises auf die Patenterteilung: **10.04.2002**
(21) Anmeldenummer: 97935549.2
(22) Anmeldetag: 29.07.1997
(51) Int. Cl.: C08F 220/12, C09J 133/06, C09J 7/04

(54) **HAFTKLEBSTOFFE MIT GERINGEN MENGEN STYROL**
PRESSURE SENSITIVE MATERIALS WITH SMALL AMOUNTS OF STYRENE
MATIERES AUTO-ADHESIVES CONTENANT DE FAIBLES QUANTITES DE STYRENE

(30) Priorität: 09.08.1996 DE 19632203
(43) Veröffentlichungstag der Anmeldung: 26.05.1999
(73) Patentinhaber: BASF AKTIENGESELLSCHAFT, 67056 Ludwigshafen (DE)
(72) Erfinder: SCHULER, Bernhard, 68199 Mannheim (DE); AUCHTER, Gerhard, D-67098 Bad Dürkheim (DE); TÜRK, Johannes, D-67459 Böhl-Iggelheim (DE); NOORDIJK, Rik, D-67117 Limburgerhof (DE); DOBBELAAR, Johannes, D-67157 Wachenheim (DE); BÄCHER, Reinhard, D-67098 Bad Dürkheim (DE); HÜMMER, Wolfgang, D-67134 Birkenheide (DE)
(86) Internationale Anmeldenummer: EP9704102
(87) Internationale Veröffentlichungsnummer: WO9806763

(56) Entgegenhaltungen:
- DE-A- 3 710 441
- GB-A- 956 799
- GB-A- 2 168 990

## Beschreibung

Die Erfindung betrifft ein Polymerisat, aufgebaut aus
50 bis 99,98 Gew.-% eines C₁-C₁₂ Alkyl(meth)acrylats a)
0,02 bis 1,8 Gew.-% einer vinylaromatischen Verbindung b)
0 bis 10 Gew.-% einer ethylenisch ungesättigten Säure oder eines ethylenisch ungesättigten Säureanhydrids c) und
0 bis 40 Gew.-% weiterer Monomere d), wobei die Gewichtsprozente auf das Polymerisat bezogen sind und konjugierte Diene ausgeschlossen sind.

Desweiteren betrifft die Erfindung die Verwendung der Polymerisate oder ihrer wäßrigen Dispersionen.

Haftklebstoffe bilden einen bleibenden klebrigen Film, der schon unter geringem Druck bei Raumtemperatur an den verschiedensten Oberflächen haftet (eng.: pressure sensitive adhesives (PSA). Haftklebstoffe dienen zum Herstellen selbstklebender Erzeugnisse wie Selbstklebeetiketten, -bänder oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sog. "offene Zeit", innerhalb der die Verklebung ausgeführt werden muß, existiert nicht. Die Qualität eines selbstklebenden Artikels hängt im wesentlichen davon ab, ob die innere Festigkeit (Kohäsion) und die Haftung des Klebstoffilms auf der zu beklebenden Oberfläche (Adhäsion) entsprechend der Anwendung aufeinander abgestimmt sind.

Insbesondere bei Haftklebstoffen für Etiketten muß die Kohäsion so groß sein, daß beim Stanzen und Schneiden kein Fadenziehen bzw. Kantenaustritt auftritt, da es sonst zu Verschmutzungen der Schneidewerkzeuge und Verklebung der Schnittflächen kommt. Gleichzeitig soll die Adhäsion auf einem hohen Niveau liegen, um eine gute Haftung auf dem zu beklebenden Substrat zu erreichen.

DE-A-3710441 offenbart Haftklebstoffe auf Basis von Polymeren mit einem Gehalt an Styrol und konjugierten Dienen.

Adhäsion und Kohäsion sind im allgemeinen nicht unabhängig voneinander optimierbar. Gewünscht sind Maßnahmen, die entweder das Niveau beider Eigenschaften anheben oder zumindest eine Eigenschaft unverändert erhalten, während sich die jeweils andere verbessert.

Haftklebstoffe bzw. Klebstoffe auf Basis von Polymerisaten, welche Styrol enthalten können, sind bereits aus DE-A-3 013 812. US-A-5 416 134 und EP-A-625 557 bekannt. Die in den Beispielen dieser Veröffentlichungen verwendeten oder hergestellten Polymerisate enthalten jedoch mindestes 4 Gew.-% Styrol. Derartige Copolymerisate zeigen noch nicht das gewünschte Adhäsions-, Kohäsionsniveau, bzw. Adhäsions-, Kohäsionsverhältnis.

Aufgabe der vorliegende Erfindung waren daher Polymerisate mit verbesserter Adhäsion und/oder Kohäsion. Demgemäß wurden die oben definierten Polymerisate und ihre Verwendung als Haftklebestoffe gefunden.

Das erfindungsgemäße Polymerisat enthält bevorzugt mindestens 0,05 Gew.-% einer vinylaromatischen Verbindung und bevorzugt nicht mehr als 1,5 Gew.-% insbesondere nicht mehr als 1,0 Gew.%, besonders bevorzugt nicht mehr als 0,5 Gew.-% der vinylaromatischen Verbindung.

Bevorzugte Polymerisate sind aufgebaut aus

| | |
|---|---|
| 50 bis 99,98 Gew.-% | eines C₁-C₁₂ Alkyl(meth)acrylats a) |
| 0,02 bis 1,5 Gew.-% | einer vinylaromatischen Verbindung b) |
| 0 bis 10 Gew.-% | einer ethylenisch ungesättigten Säure c) |
| 0 bis 40 Gew.-% | weiteren, von a) bis c) verschiedenen Monomeren d) |

Besonders bevorzugte Polymerisate sind aufgebaut aus

| | | |
|---|---|---|
| 60 bis 99,95 | Gew.-% | a) |
| 0,05 bis 1 | Gew.-% | b) |
| 0 bis 5 | Gew.-% | c) |
| 0 bis 35 | Gew.-% | d) |

Ganz besonders bevorzugte Polymerisate sind aufgebaut aus

| | | |
|---|---|---|
| 80 bis 99,8 | Gew.-% | a) |
| 0,2 bis 1 | Gew.-% | b) |
| 0 bis 2 | Gew.-% | c) |
| 0 bis 18 | Gew.-% | d) |

In einer besonderen Ausführungsform beträgt der Gehalt der Monomeren c) mindestens 0,1 Gew.-%, wobei sich der maximale Gehalt der Komponenten a) entsprechend erniedrigt.

Geeignete C₁ bis C₁₂ Alkyl(meth)acrylate sind insbesondere Methylacrylat, Methylmethacrylat, Ethylacrylat, n-Butylacrylat und 2-Ethylhexylacrylat, n-Butylmethacrylat, t-Butylmethacrylat, isoButylacrylat, iso-Octylacrylat.

In einer besonders bevorzugten Ausführungsform enthalten die Monomeren a) zwingend C₁-C₂-Alkyl(meth)acrylate (Monomere a₁₎) neben C₃-bis-C₁₂-Alkyl(meth)acrylaten (Monomere a₂₎).

Insbesondere handelt es sich bei 5 bis 50 Gew.-% bevorzugt 10 bis 40 Gew.-% besonders bevorzugt 10 bis 20 Gew.-% der Gesamtmenge der Monomeren a) um Monomere a₁₎, d.h. um Methyl(meth)acrylat oder Ethyl(meth)acrylat, vorzugsweise um Methylacrylat.

Als vinylaromatische Verbindungen seien bevorzugt solche mit bis zu 20 C-Atomen genannt. In Betracht kommen z.B. Vinyltoluol, α- und β-Methylstyrol. Besonders bevorzugt ist Styrol.

Ethylenisch ungesättigte Säuren oder Anhydride c) sind z.B. Maleinsäure, Fumarsäure, Itaconsäure und bevorzugt Acrylsäure bzw. Methacrylsäure, (Meth)acrylsäureanhydrid oder Maleinsäureanhydrid

Als weitere Monomere seien insbesondere Alkyl(meth)acrylate mit mehr als 12 C-Atomen in Alkylrest, Hydroxylgruppen enthaltende Monomere, insbesondere C₁-C₁₀-Hydroxyalkyl(meth)acrylate, Vinylester von Carbonsäuren mit 1 bis 20 C-Atomen, z.B. Vinylacetat, Vinylpropionat, Vinylether, vorzugsweise von 1 bis 4 C-Atome enthaltenden Alkoholen, z.B. Vinylmethylether oder Vinylisobutylether und Kohlenwasserstoffe mit 2 bis 8 C-Atomen und ein oder zwei ethylenisch ungesättigten Gruppen, z.B. Ethylen, sowie Nitrilgruppen enthaltende Monomere, z. B. (Meth)acrylnitril genannt.

Die Monomeren können vorzugsweise radikalisch oder soweit möglich auch anionisch polymerisiert werden. Sowohl die radikalische als auch die anionische Polymerisation sind übliche Polymerisationsmethoden dem Fachmann bekannt.

Die radikalische Polymerisation kann z.B. in Lösung, z.B. eines organischen Lösungsmittels (Lösungspolymerisation) in wäßriger Dispersion (Emulsionspolymerisation, Suspensionspolymerisation) oder in Masse, d.h. im wesentlichen in Abwesenheit von Wasser oder organischen Lösungsmitteln (Massepolymerisation) durchgeführt werden.

Bevorzugt erfolgt die Herstellung des erfindungsgemäßen Polymerisats durch Emulsionspolymerisation.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständliche müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄ bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 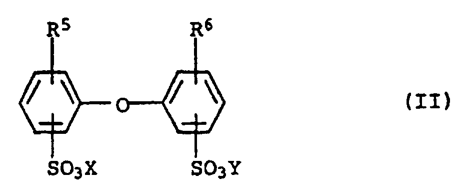 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen,
wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Der Anteil dieser Regler kann insbesondere 0 bis 0,3 Gew.-%, bevorzugt 0,02 bis 0,3 Gew.-% bezogen auf das Polymerisat, betragen.

Die Emulsionspolymerisation erfolgt in der Regel bei 30 bis 95, vorzugsweise 50 bis 90°C. Das. Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew. -%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen.
Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/ neuer Teilchengeneration/en kann zu einem beliebigen Zeitpunkt erfolgen. Er richtet sich nach den für eine niedrige Viskosität angestrebten Teilchengrößenverteilung.

Die erfindungsgemäßen Polymerisate können als Klebstoffe, insbesondere Haftklebstoffe verwendet werden. Insbesondere eigenen sie sich als Haftklebstoffe für Etiketten.

Die Polymerisate werden vorzugsweise in Form ihrer wäßrigen Dispersion verwendet.

Bei der Verwendung als Haftklebstoff wird den Polymerisaten bzw. den wäßrigen Dispersionen der Polymerisate vorzugsweise ein Tackifier, d.h. ein klebrigmachendes Harz zugesetzt. Tackifier sind z.B. aus Adhäsive Age, Juli 1987, Seite 19-23 oder Polym. Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen)) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wäßrigen Dispersionen der Polymerisate zugesetzt werden. Vorzugsweise liegen die Tackifier dabei selber in Form einer wäßrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat. (fest/fest).

Neben Tackifiern können z.B. noch Additive z.B. Verdickungsmittel, Entschäumer, Weichmacher, Pigmente, Netzmittel oder Füllstoffe bei der Verwendung als Klebstoff bzw. Haftklebstoff Verwendung finden.

Bei der Verwendung als Klebstoff bzw. Haftklebstoff können die erfindungsgemäßen Polymerisate bzw. wäßrigen Dispersionen oder wäßrigen Zubereitungen durch übliche Methoden, z.B. durch Rollen, Rakeln, Streichen etc. auf Substrate, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Das Wasser kann bevorzugt durch Trocknung bei 50 bis 150°C entfernt werden. Zur späteren Verwendung kann die mit Klebstoff bzw. Haftklebstoff beschichtete Seite der Substrate, z.B. der Etiketten, mit einem Releasepapier, z.B. mit einem silikonisierten Papier, abgedeckt werden.

Die erfindungsgemäßen Polymerisate zeigen bei der Verwendung als Klebstoffe eine verbesserte Kohäsion, bzw. ein verbessertes Adhäsions-/Kohäsionsverhältnis

### Beispiele

### Prüfmethoden

a) Herstellung der Prüfstreifen
   Die zu prüfende Dispersion wird im Verhältnis 75/25 (bezogen auf Feststoff) mit einer handelsüblichen wäßrigen Kolophoniumharzester-Dispersion (Tacolyn 3179, Fa. Hercules) abgemischt. Die Mischung wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoffe eine Auftragsmenge von 19-21 g/m² ergibt. Auf den getrockneten Klebstoff wird handelsübliches weißes Etikettenpapier (Flächengewicht. 80 g/m²) aufgelegt und mit einem Handroller fest angerollt. Das so hergestellte Etikettenlaminat wird in Streifen von 0,5 inch und von 2 cm Breite geschnitten. Diese Streifen werden vor der Prüfung mindestens 24h im Normklima gelagert.
b) Prüfung der Scherfestigkeit als Maß für die Kohäsion (in Anlehnung an FINAT FTM 7)
   Nach Abziehen des silikonisierten Papiers wird der Etiketten-Prüfstreifen so auf den Rand eines Prüfblechs aus Edelstahl verklebt, daß sich eine Verklebunqsfläche von 0,5 inch x 0,5 inch ergibt. 20 Minuten nach dem Verkleben wird am überstehenden Ende des Papierstreifens ein 500 g-Gewichts befestigt und das Prüfblech senkrecht aufgehängt, Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Minuten angegeben.
c) Prüfung der Schälfestigkeit als Maß für die Adhäsion (in Anlehnung an FINAT FTM 1)
   Nach Abziehen des silikonisierten Papiers wird ein 2 cm breiter Etiketten-Prüfstreifen auf ein Prüfblech aus Edelstahl verklebt. Umgebungsbedingungen: 23°C, 50 % relative Luftfeuchtigkeit. 1 Minute nach der Verklebung wird der Streifen mit Hilfe einer Zugprüfmaschine in einem Winkel von 180°C mit einer Geschwindigkeit von 75 mm/min abgezogen. Als Schälfestigkeit wird die dafür im Mittel erforderliche Kraft in N/2cm als Mittelwert aus den Ergebnissen von drei Prüfkörpern angegeben. Zusätzlich wird das Bruchbild beurteilt. Dabei bedeuten:
   - A: adhäsiver Bruch, kein Rückstand auf dem Edelstahlblech
   - K: kohäsiver Bruch (Trennung im Klebstoff)
   - F: Film, dünner, nicht klebender Film auf dem Edelstahlblech; Klebstoff bleibt auf dem Papierstreifen
   - PR: Papier reißt

### Vergleichsbeispiel 1:

In einem Polymerisationsreaktor wird eine Lösung von 0,75 g Ascorbinsäure in 328 g Wasser auf 85°C unter Rühren erwärmt und dann unter weiterem Rühren eine Lösung von 0,6 g Natriumperoxodisulfat in 8 g Wasser zugegeben. Nach 5 min wird Zulauf 1 gestartet und in den ersten 10 min mit einer Zulaufgeschwindigkeit von 1,9 g/min dosiert. Dann wird für die nächsten 10 min die Zulaufgeschwindigkeit von Zulauf 1 auf 3,8 g/min und dann für weitere 10 min auf 5,7 g/min erhöht. Die Zulaufgeschwindigkeit wird dann auf 9,96 g/min gesteigert und über weitere 180 min konstant gehalten. Zeitgleich mit Zulauf 1 wird die Zugabe einer Lösung von 5,4 g Natriumperoxodisulfat in 72 g Wasser gestartet und mit konstanter Zulaufgeschwindigkeit in 210 min dosiert. Nach dem Ende des Zulaufs 1 wird noch 15 min bei 85°C gerührt und dann auf 80°C abgekühlt. Bei dieser Temperatur werden unter Rühren zeitgleich 15 g einer 10 %igen Lösung von tert.-Butylhydroperoxid in Wasser sowie eine Lösung von 1,5 g Natriumdisulfit in einer Mischung aus 10 g Wasser und 1,4 g Aceton zudosiert.

### Zulauf 1:

| | |
|---|---|
| 340 g | Wasser, |
| 51,4 g | einer 35 %igen wäßrigen Lösung des Natriumsalzes des Schwefelsäurehalbesters von mit 25 Ethylenoxideinheiten ethoxyliertem Nonylphenol |
| 15 g | einer 25 %igen wäßrigen Lösung von Natronlauge |
| 1,05 g | tert.-Dodecylmercaptan, |
| 7,5 g | Acrylsäure (AS), |
| 247,5 g | Methylacrylat (MA), |
| 870 g | Butylacrylat (BA), |
| 375 g | 2-Ethylhexylacrylat (EHA). |

### Beispiel 1:

Es wird wie in Vergleichsbeispiel 1 verfahren, mit dem Unterschied, daß in Zulauf 1
1,5 g des Methylacrylats durch Styrol(S) ersetzt sind.

### Beispiel 2:

Es wird wie in Vergleichsbeispiel 1 verfahren, mit dem Unterschied, daß in Zulauf 1
3,75 g des Methylacrylats durch Styrol ersetzt sind.

### Beispiel 3:

Es wird wie in Vergleichsbeispiel 1 verfahren, mit dem Unterschied, daß in Zulauf 1
7,5 g des Methylacrylats durch Styrol ersetzt sind.

### Beispiel 4:

Es wird wie in Vergleichsbeispiel 1 verfahren, mit dem Unterschied, daß in Zulauf 1
15 g des Methylacrylats durch Styrol ersetzt sind.

### Vergleichsbeispiel 2:

Es wird wie in Vergleichsbeispiel 1 verfahren, mit dem Unterschied, daß in Zulauf 1
30 g des Methylacrylats durch Styrol ersetzt sind.

**Tabelle 1:**

| Zusammensetzung der Copolymerisate (Gew. -%) | | | | | |
|---|---|---|---|---|---|
| Copolymerisat aus | AS | MA | BA | EHA | S |
| Vergleichsbeispiel 1 | 0,5 | 16,5 | 58 | 25 | - |
| Beispiel 1 | 0,5 | 16,4 | 58 | 25 | 0,1 |
| Beispiel 2 | 0,5 | 16,25 | 58 | 25 | 0,25 |
| Beispiel 3 | 0,5 | 16,0 | 58 | 25 | 0,5 |
| Beispiel 4 | 0,5 | 15,5 | 58 | 25 | 1,0 |
| Vergleichsbeispiel 2 | 0,5 | 14,5 | 58 | 25 | 2,0 |

**Tabelle 2:**

| Klebewerte | | | | |
|---|---|---|---|---|
| | Feststoffgehalt | Schälfestigkeit | | Kohäsion |
| | [%] | [N/2cm] | BB* | [min] |
| Vergleichsbeispiel 1 | 65,2 | 6,8 | F | 42 |
| Beispiel 1 | 65,7 | 7,6 | F | 42 |
| Beispiel 2 | 65,4 | 9,0 | F/K | 55 |
| Beispiel 3 | 65,3 | 10,5 | F/K | 47 |
| Beispiel 4 | 65,2 | 11,8 | F/K | 40 |
| Vergleichsbeispiel 2 | 63,9 | 18 | F/K | 4 |

| | | | | |
|---|---|---|---|---|
| * BB: Bruchbild | | | | |

### Vergleichsbeispiel 3:

Es wird wie in Vergleichsbeispiel 1 verfahren, mit dem Unterschied, daß die Monomerenzusammensetzung in Zulauf 1 besteht aus:

| | |
|---|---|
| 7,5 g | Acrylsäure (AS) |
| 247,5 g | Methylacrylat(MA) |
| 1020 g | Butylacrylat(BA) |
| 225 g | 2-Ethylhexylacrylat(EHA) |

### Beispiel 5:

Es wird wie in Vergleichsbeispiel 3 verfahren, mit dem Unterschied, daß in Zulauf 1
3,75 g des Methylacrylats durch Styrol ersetzt sind.

### Beispiel 6:

Es wird wie in Vergleichsbeispiel 3 verfahren, mit dem Unterschied, daß in Zulauf 1
15 g des Methylacrylats durch Styrol ersetzt sind.

**Tabelle 3:**

| Zusammensetzung der Copolymerisate in Gew.-% | | | | | |
|---|---|---|---|---|---|
| Copolymerisat aus | AS | MA | BA | EHA | S |
| Vergleichsbeispiel 3 | 0,5 | 16,5 | 68 | 15 | - |
| Beispiel 5 | 0,5 | 16,2 | 68 | 15 | 0,25 |
| Beispiel 6 | 0,5 | 15,5 | 68 | 15 | 1,0 |

**Tabelle 4:**

| Klebewerte | | | | |
|---|---|---|---|---|
| | Feststoffgehalt | Schälfestigkeit | | Kohäsion |
| | [%] | [N/2cm] | BB* | [min] |
| Vergleichsbeispiel 3 | 65,2 | 7,3 | F | 48 |
| Beispiel 5 | 65,0 | 15,2 | F/PR | 43 |
| Beispiel 2 | 65,3 | 15,8 | F/K | 33 |

| | | | | |
|---|---|---|---|---|
| * BB: Bruchbild | | | | |

### Vergleichsbeispiel 4:

In einem Polymerisationsreaktor wird eine Lösung von 0,75 g Ascorbinsäure in 281 g Wasser auf 85°C unter Rühren erwärmt und dann unter weiterem Rühren eine Lösung von 0,6 g Natriumperoxodisulfat in 15 g Wasser zugegeben. nach 5 min. wird Zulauf 1 gestartet und in den ersten 10 min mit einer Zulaufgeschwindigkeit von 1,9 g/min dosiert. Dann wird für die nächsten 10 min die Zulaufgeschwindigkeit von Zulauf 1 auf 3,8 g/min und dann für weitere 10 min auf 5,7 g/min erhöht. Die Zulaufgeschwindigkeit wird dann auf 9,96 g/min gesteigert und über weitere 180 min konstant gehalten. zeitgleich mit Zulauf 1 wird der Zugabe einer Lösung von 5,4 g Natriumperoxodisulfat in 135 g Wasser gestartet und mit konstanter Zulaufgeschwindigkeit in 210 min dosiert. Nach dem Ende des Zulaufs 1 wird noch 15 min bei 85°C gerührt und dann auf 80°C abgekühlt. Bei dieser Temperatur werden unter Rühren zeitgleich 15 g einer 10 %igen Lösung von tert.-Butylhydroperoxid in Wasser sowie eine Lösung von 1,5 g Natriumdisulfit in einer Mischung aus 10 g Wasser und 1,05 g Aceton zudosiert.

### Zulauf 1:

| | |
|---|---|
| 310 g | Wasser, |
| 51,4 g | einer 35 %igen wäßrigen Lösung des Natriumsalzes des Schwefelsäurehalbesters von mit 25 Ethylenoxideinheiten ethoxyliertem Nonylphenol, |
| 9,6 g | einer 25 %igen wäßrigen Lösung von Natronlauge, |
| 1,05 g | tert.-Dodecylmercaptan, |
| 15 g | Methacrylsäure (MAS), |
| 30 g | Hydroxyethylacrylat (HEA), |
| 195 g | Methylmethacrylat (MMA), |
| 435 g | Butylacrylat (BA), |
| 825 g | 2-Ethylhexylacrylat (EHA). |

### Beispiel 7:

Es wird wie in Vergleichsbeispiel 1 verfahren, mit dem Unterschied, daß in Zulauf 1
3,75 g des Methylmethacrylats durch Styrol ersetzt sind.

### Beispiel 8:

Es wird wie in Vergleichsbeispiel 1 verfahren, mit dem Unterschied, daß in Zulauf 1
7,5 g des Methylmethacrylats durch Styrol ersetzt sind.

### Beispiel 9:

Es wird wie in Vergleichsbeispiel 1 verfahren, mit dem Unterschied, daß in Zulauf 1
15 g des Methylmethacrylats durch Styrol ersetzt sind.

### Vergleichsbeispiel 5:

Es wird wie in Vergleichsbeispiel 1 verfahren, mit dem Unterschied, daß in Zulauf 1
30 g des Methylmethacrylats durch Styrol ersetzt sind.

**Tabelle 5:**

| Zusammensetzung der Copolymerisate in Gew.-% | | | | | | |
|---|---|---|---|---|---|---|
| Copolymerisat aus | MAS | HEA | MMA | BA | EHA | S |
| Vergleichsbeispiel 4 | 1 | 2 | 13 | 29 | 55 | - |
| Vergleichsbeispiel 5 | 1 | 2 | 11 | 29 | 55 | 2 |
| Beispiel 7 | 1 | 2 | 12,75 | 29 | 55 | 0,25 |
| Beispiel 8 | 1 | 2 | 12,5 | 29 | 55 | 0,5 |
| Beispiel 9 | 1 | 2 | 12 | 29 | 55 | 1 |

**Tabelle 6:**

| Klebewerte | | | | |
|---|---|---|---|---|
| | Feststoffgehalt | Schälfestigkeit | | Kohäsion |
| | [%] | [N/2cm] | BB* | [min] |
| Vergleichsbeispiel 4 | 64,7 | 12,0 | F/PR | 47 |
| Beispiel 7 | 65,1 | 14,8 | F/PR | 46 |
| Beispiel 8 | 64,7 | 18,7 | F/PR | 46 |
| Beispiel 9 | 65,1 | 18,4 | F/PR | 35 |
| Vergleichsbeispiel 5 | 63,9 | 18,5 | F/PR | 12 |

| | | | | |
|---|---|---|---|---|
| * BB: Bruchbild | | | | |

Wie man aus den Beispielen entnehmen kann, steigt bei der Zugabe kleiner Mengen einer vinylaromatischen Verbindung der Adhäsionswert stark an, während des Kohäsionswert praktische gleiche bleibt. Wählt man die Menge der vinylaromatischen VErbindung zu hoch, fällt bei gleichbleibenden Adhäsionswert die Kohäsion auf einen zu geringen Wert ab.

## Patentansprüche

1. Polymerisat, aufgebaut aus
50 bis 99,98 Gew.-% eines C₁-C₁₂ Alkyl(meth)acrylats a)
0,02 bis 1,8 Gew.-% einer vinylaromatischen Verbindung mit bis zu 20 C-Atomen b)
0 bis 10 Gew.-% einer ethylenisch ungesättigten Säure oder eines ethylenisch ungesättigten Säureanhydrids c) und
0 bis 40 Gew.-% weiterer Monomere d),
wobei die Gewichtsprozente auf das Polymerisat bezogen sind und konjugierte Diene ausgeschlossen sind.

2. Wäßrige Dispersion, enthaltend ein Polymerisat gemäß Anspruch 1.

3. Verwendung der wäßrigen Dispersion gemäß Anspruch 2 als Haftklebstoff.

4. Verwendung der wäßrigen Dispersion gemäß Anspruch 2 als Haftklebstoff für Etiketten.

5. Haftklebstoff, enthaltend ein Polymerisat gemäß Anspruch 1 bzw. eine wäßrige Dispersion gemäß Anspruch 2.

6. Haftklebstoff gemäß Anspruch 5, enthaltend zusätzlich ein klebrig-machendes Harz.

7. Mit einem Haftklebstoff gemäß Anspruch 5 oder 6 beschichtete Substrate.

8. Mit einem Haftklebstoff gemäß Anspruch 5 oder 6 beschichtete Etiketten.

## Claims

1. A polymer composed of
from 50 to 99.98% by weight of a C₁-C₁₂ alkyl (meth)acrylate a),
from 0.02 to 1.8% by weight of a vinyl-aromatic compound having up to 20 carbon atoms b),
from 0 to 10% by weight of an ethylenically unsaturated acid or an ethylenically unsaturated acid anhydride c), and
from 0 to 40% by weight of other monomers d),
the percentages by weight being based on the polymer, and conjugated dienes being excluded.

2. An aqueous dispersion comprising a polymer as claimed in claim 1.

3. The use of an aqueous dispersion as claimed in claim 2 as a pressure-sensitive adhesive.

4. The use of an aqueous dispersion as claimed in claim 2 as a pressure-sensitive adhesive for labels.

5. A pressure-sensitive adhesive comprising a polymer as claimed in claim 1 or an aqueous dispersion as claimed in claim 2.

6. A pressure-sensitive adhesive as claimed in claim 5, additionally comprising a tackifier resin.

7. A substrate coated with a pressure-sensitive adhesive as claimed in claim 5 or 6.

8. A label coated with a pressure-sensitive adhesive as claimed in claim 5 or 6.

## Revendications

1. Polymère constitué de
50 à 99,98% en poids d'un (méth)acrylate d'alkyle en C₁ à C₁₂ a)
0, 02 à 1,8% en poids d'un composé vinylaromatique comportant jusqu'à 20 atomes de carbone b)
0 à 10% en poids d'un acide éthyléniquement insaturé ou d'un anhydride d'acide éthyléniquement insaturé et
0 à 40% en poids d'autres monomères d),
les pourcentages en poids étant ramenés au polymère à l'exclusion de diènes conjugués.

2. Dispersion aqueuse contenant un polymère selon la revendication 1.

3. Utilisation de la dispersion aqueuse selon la revendication 2 comme adhésif.

4. Utilisation de la dispersion aqueuse selon la revendication 2 comme adhésif pour étiquettes.

5. Adhésif contenant un polymère selon la revendication 1 et/ou une dispersion aqueuse selon la revendication 2.

6. Adhésif selon la revendication 5, contenant en outre une résine adhérisante.

7. Substrats enduits d'un adhésif selon la revendication 5 ou 6.

8. Etiquettes enduites d'un adhésif selon la revendication 5 ou 6.
